# EUROPEAN PATENT SPECIFICATION

(11) **EP 2 314 870 B1**
(45) Date of publication and mention of the grant of the patent: **11.10.2017**
(21) Application number: 08778252.0
(22) Date of filing: 17.07.2008
(51) Int. Cl.: F03D 7/06, F03D 3/06

(54) **POWER-GENERATING WIND TURBINE AND ITS MANUFACTURING METHOD**
ENERGIEERZEUGENDE WINDTURBINE UND HERSTELLUNGSVERFAHREN DAFÜR
EOLIENNE DE GENERATION D'ENERGIE ET SON PROCEDE DE FABRICATION

(43) Date of publication of application: 27.04.2011
(73) Proprietor: Noai Co. Ltd., Niigata 950-0952 (JP)
(72) Inventor: HARA, Akio, Chuou-ku, Niigata-shi Niigata 950-0965 (JP)
(74) Representative: Isarpatent
(86) International application number: PCT/JP2008/062960
(87) International publication number: WO 2010/007684

(56) References cited:
- EP-A1- 1 544 459
- EP-A1- 1 757 806
- EP-A1- 2 236 819
- EP-A2- 1 422 422
- WO-A1-2004/009993
- WO-A1-2005/116446
- DE-A1- 3 626 917
- JP-A- 2000 120 524
- JP-A- 2003 269 320
- JP-A- 2003 336 572
- JP-A- 2004 108 330
- JP-A- 2005 307 850
- JP-A- 2005 307 850
- JP-T- 60 500 221
- JP-U- 57 191 873

## Description

### TECHNICAL FIELD

The present invention relates to a power-generating wind turbine and a method of manufacturing the same.

### BACKGROUND ART

In the wind power generation of the vertical shaft and vertical airfoil type, the rotation of blades for wind power generation by wind force is effected by the use of not only drag force being a wind force for pressing the blades but also lift force produced on the blades by the rotation thereof, thereby accomplishing intended power generation.

A Savonius wind turbine of the configuration emphasizing a wind receiving area is generally known as being useful in the wind power generation utilizing drag forces. The blades thereof can be rotated by a slight breeze of about 1 m/sec wind speed. However, no rotary torque during rotation exceeding the wind speed can be obtained. On the other hand, a gyro-mill wind turbine based on the same airfoil configuration as in aircraft is generally known as being useful in the wind power generation utilizing lift forces. However, the blades thereof cannot be rotated by a slight breeze produced during rotation.

Taking these problems into account, it was proposed to use a gyro-mill wind turbine which obtains drag forces at rotation start-up through cutting out a portion of the inner face side of the blades having the same airfoil shape as in aircraft so that it can be rotated by a slight breeze (see, for example, patent reference 1). Other examples can be seen in DE 3626917 A and EP 1757806 A. Patent reference 1: Japanese Patent No. 3451085.

### DISCLOSURE OF THE INVENTION

### PROBLEM TO BE SOLVED BY THE INVENTION

In the above wind turbine, the problem of wind turbulence occurring during rotation could not be solved because of the cutout of a portion of the inner face side of the blades. Consequently, the lift force is decreased, thereby lowering its proper rotary torque. Therefore, a high electricity-generating capacity being an object of wind power generation could not be attained.

In the conventional wind power generator of the vertical shaft and vertical airfoil type, as the blade having the same airfoil shape as in aircraft, use is made of one obtained by bending a thin sheet of an aluminum alloy. This poses the problem of, because of the difficulty in ensuring the uniformity of the shape of the front-edge portion of the blade, rendering the air flow turbulent, and invites the danger of poor strength, distortion or the like.

Therefore, it is an object of the present invention to provide a power-generating wind turbine that can be actuated by a slight breeze and can suppress any turbulence of wind by rotation, thereby realizing an excellent power generation efficiency.

### MEANS FOR SOLVING THE PROBLEM

According to the present invention, there is provided a power-generating wind turbine comprising a vertical rotating shaft and, provided at given angular intervals around the rotating shaft within a plane orthogonal to the vertical rotating shaft, a plurality of blades, each of these blades having the shape of a streamlined airfoil exhibiting a lift coefficient of 1.0 or higher, wherein the face of the airfoil on the side of the rotating shaft with respect to a chord of the airfoil is provided with an opening portion in a region of 55 to 95% of the length of the chord from its front edge.

Further, according to the present invention, the area of the opening portion is in the range of 30 to 5% of the area of the face of the airfoil on the side of the rotating shaft.

Further, according to the present invention, the face of the airfoil on the side of the rotating shaft is provided with a plurality of opening portions.

Further, according to the present invention, the opening portion comprises a member thinner than that of a front portion of the blades.

Moreover, according to the present invention, there is provided a method of manufacturing the blades defined in claim 1, comprising forming at least a portion of each of the blades by extrusion of an aluminum alloy.

Further, according to the present invention, there is provided the manufacturing method as mentioned above, wherein the front portion of each of the blades is formed by extrusion of an aluminum alloy.

Further, according to the present invention, there is provided the manufacturing method as mentioned above, wherein the front portion has a hollow portion, and wherein the coupling portion at its end portion is provided with a tier portion corresponding to the thickness of the rear-side member and a front side of the rear-side member is disposed on the tier portion.

Further, according to the present invention, there is provided the manufacturing method as mentioned above, wherein the front portion is provided with a coupling portion configured to couple a rear-side member to the front portion.

Further, according to the present invention, there is provided the manufacturing method as mentioned above, wherein rear-side member has a thickness smaller than that of the front portion.

Further, according to the present invention, there is provided the manufacturing method as mentioned above, wherein the coupling portion is formed by extrusion of an aluminum alloy.

Further, according to the present invention, there is provided the manufacturing method as mentioned above, wherein there is provided coupling means for coupling the front portion to the coupling portion.

Further, according to the present invention, there is provided the manufacturing method as mentioned above, wherein the coupling means includes a fitting portion provided on one of the front portion and the coupling portion and a fitting receiving portion provided on the other thereof.

### EFFECT OF THE INVENTION

By virtue of the above arrangement of constituent elements, the wind turbine can be actuated even with a slight breeze due to the drag force at the opening portion. In a zone of high wind speed in which the wind turbine is rotated by the lift force of the blades, as the face of the blades on the side of the rotating shaft is provided with the opening portion in a region of 55 to 95% of the length of the chord set distant from its front edge, any turbulence of wind flow on the face on the side of the rotating shaft that causes resistance can be suppressed, thereby realizing a high rotary torque.

Further, by virtue of the above arrangement of constituent elements, the ratio of the area of opening portion is small, thereby realizing enhanced suppression of any wind flow turbulence.

Further, by virtue of the above arrangement of constituent elements, there are provided a plurality of opening portions, thereby realizing efficient capturing of wind at start-up.

Further, by virtue of the above arrangement of constituent elements, the front portion exposed to an intense wind resistance can have a large thickness, thereby ensuring desirable strength of the front portion, while the material of the opening portions can have a small thickness, thereby contributing to weight reduction.

By virtue of the above arrangement of constituent elements relating to the manufacturing method, uniform thickness and shape can be ensured by extrusion forming of an aluminum alloy.

Further, by virtue of the above arrangement of constituent elements, desirable strength and uniform shape can be ensured for the front portion exposed to an intense wind resistance.

Further, by virtue of the above arrangement of constituent elements, enhanced strength can be realized by including a hollow portion.

Further, by virtue of the above arrangement of constituent elements, a rear-side member can be coupled to a coupling portion.

Further, by virtue of the above arrangement of constituent elements, the thickness of the rear-side member can be reduced, thereby attaining weight reduction.

Further, by virtue of the above arrangement of constituent elements, desirable strength and uniform configuration can be ensured for the coupling portion.

Further, by virtue of the above arrangement of constituent elements, a front side of the rear-side member can be disposed on a tier portion, thereby avoiding the occurrence of any level difference between the front portion and the rear-side member

Further, by virtue of the above arrangement of constituent elements, the front portion and the coupling portion can be coupled to each other by coupling means.

Further, by virtue of the above arrangement of constituent elements, the front portion and the coupling portion can be coupled to each other by fitting of a fitting portion to a fitting receiving portion.

### BEST MODE FOR CARRYING OUT THE INVENTION

Preferred embodiments of the present invention will be described in detail below with reference to the appended drawings. It should not be construed that the following embodiments limit the claimed subject matter of the present invention. Further, all the constituent elements described below are not necessarily essential elements of the present invention. The Examples describe the realization of a hitherto unknown novel power-generating wind turbine and the particulars of the power-generating wind turbine.

### EXAMPLE 1

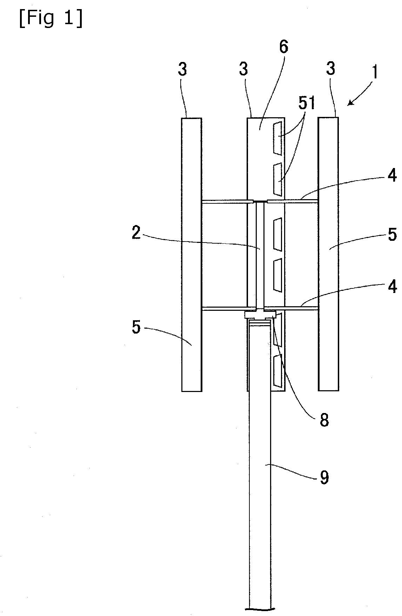

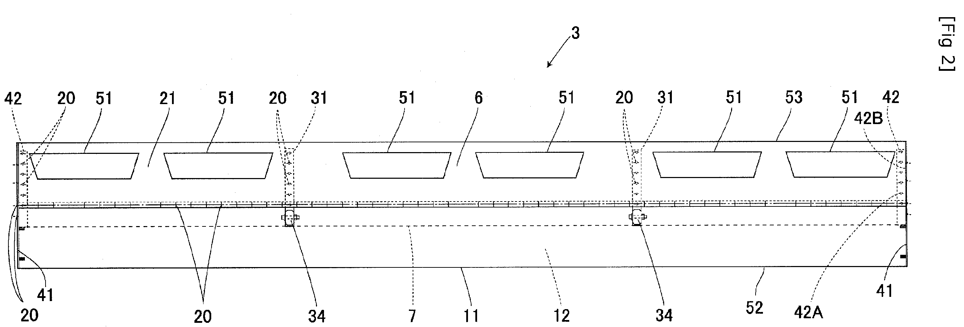

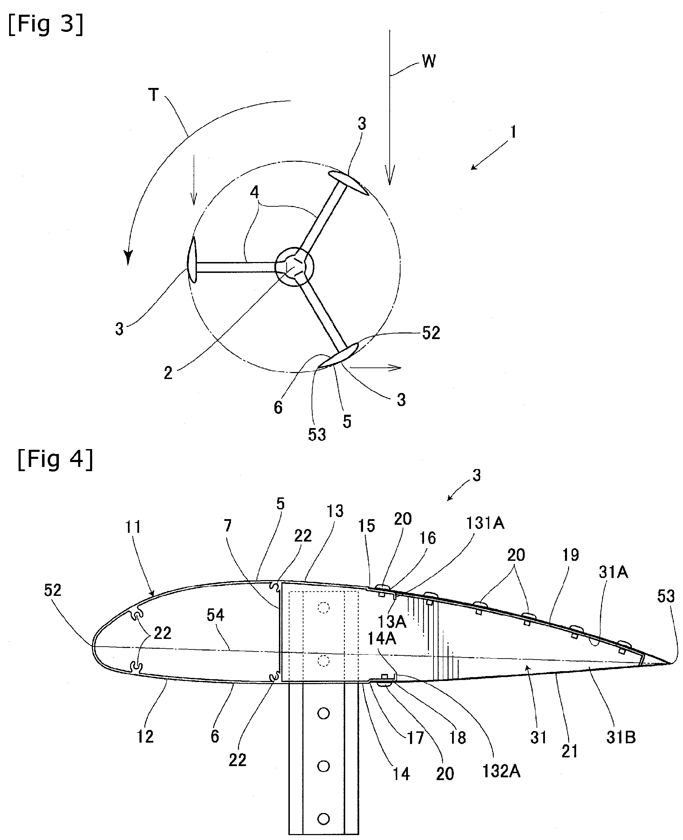

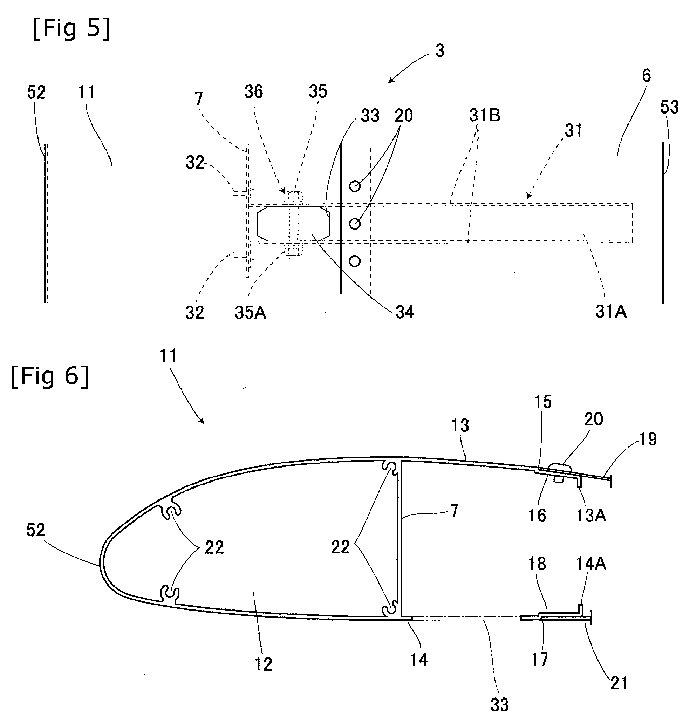

One embodiment of the present invention will be described below with reference to the appended drawings. FIGS. 1 to 6 illustrate Example 1 of the present invention. Referring to the drawings, a wind turbine 1 of the vertical shaft type is provided at its center with a vertically erected rotating shaft 2. A plurality of blades 3 are disposed around the rotating shaft 2 at equal intervals in the circumferential direction thereof. In this instance, three blades 3,3,3 are disposed in parallel relationship to the rotating shaft 2. Namely, the blades 3 are disposed at equal angular intervals (in this Example, 120° intervals) along the circumferential direction of identical radius within a plane orthogonal to the rotating shaft 2.

Each of the blades 3 is fixed to an end portion of an arm 4 radially extending from the rotating shaft 2 with a given angle to a support beam 4. A plurality of arms 4 are provided in the longitudinal direction of the blades 3. In this instance, two arms are provided.

The casing of each of the blades 3 is formed of a thin sheet of a material, for example, a light metal, such as an aluminum alloy or a titanium alloy, or a composite material, such as a fiber-reinforced plastic (FRP). Each of the blades 3 has the shape of a streamlined airfoil exhibiting a lift coefficient of 1.0 or higher, preferably 1.0 to 1.4. It is especially preferred for the shape to be that used in the main wing of a light aircraft with nonsymmetrical airfoils (aircraft whose takeoff weight is 5700 kg or less), for example, the 4-digit airfoil shape, RAF airfoil shape or Gottingen airfoil shape. The face with greater bulge of the airfoil shape (face on the outer circumferential side) constitutes the obverse face 5 of the blade 3, while the face with less bulge of the airfoil shape (face on the inner circumferential side) constitutes the reverse face 6 of the blade 3. This reverse face is the face on the side of the rotating shaft.

Each of the blades 3 thereinside is provided with a coupling member 7 for coupling the side of obverse face 5 and the side of reverse face 6 to each other. This coupling member 7 is formed of the same thin sheet of material as in the casing of each of the blades 3. This coupling member 7 prevents any deformation of the blade 3 at its rotation. In the drawing, numeral 8 denotes a power generator 8 coupled at its superior portion to the rotating shaft 2. This power generator 8 is mounted on a pole 9.

In this Example, the front portion 11 of each of the blades 3 is formed of an extrudate of an aluminum alloy. This front portion 11 is integrally provided with a hollow portion 12 positioned on the side in front of the coupling member 7 and with an obverse face coupling portion 13 and a reverse face coupling portion 14 both extending from the coupling member 7 to the rear side. In these, the same cross section continues in the longitudinal direction by virtue of extrusion forming. The obverse face coupling portion 13 at its rear end side is provided with an obverse face attaching portion 16 of inside recessed tier portion 15. The reverse face coupling portion 14 at its rear end side is provided with a reverse face attaching portion 18 of inside recessed tier portion 17. An obverse cover member 19 of a sheet thinner than the front portion 11 is fixed to the external face of the obverse face attaching portion 16 by rivets 20 as fixing means. A reverse cover member 21 of a sheet thinner than the front portion 11 is fixed to the external face of the reverse face attaching portion 18 by rivets 20. The tier portions 15,17 are so constructed that no level difference is made on the obverse face 5 and the reverse face 6. The obverse face coupling portion 13 and reverse face coupling portion 14 at the rear ends thereof are provided with folded edge portions 13A,14A which have been approximately vertically folded toward the internal side. These obverse cover member 19 and reverse cover member 21 constitute rear-side members.

In the drawing, numeral 22 denotes a plurality of screw holes provided in the front portion 11. The screw holes are provided in the hollow portion 12. The screw holes are provided at two positions at both end corner portions of the coupling member 7 and two positions on the front side.

Each of the blades 3 is provided with an arm support member 31 correspondingly to the attaching position of the arm 4. This arm support member 31 has a nearly 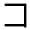 -shaped cross section, comprising a center portion 31A and, arranged on its both sides, side portions 31B,31B. The center portion 31A is arranged along the internal faces of the obverse face coupling portion 13 and obverse cover member 19 and is fixed to the obverse cover member 19 by means of a plurality of rivets 20, and the side portions 31B,31B at the front sides thereof are fixedly disposed between the obverse face coupling portion 13 and the reverse face coupling portion 14. The arm support member 31 is provided on the side of the center portion 31A with a receiving groove portion 131A configured to have the folded edge portion 13A fitted therein. Further, the arm support member 31 on an edge of the side portion 31B is provided with a receiving groove portion 131B configured to have the folded edge portion 14A fitted therein. Still further, the arm support member 31 on its front side is fixed to the coupling member 7 by means of screws 32 as a fixing member.

Moreover, the reverse face coupling portion 13 is provided with an insertion hole 33 correspondingly to the attaching position of the arm 4, and an arm receiving member 34 is inserted through the insertion hole 33. A distal end of the arm 4 is inserted through the arm receiving member 34, and the distal end is fitted in the space between the side portions 31B,31B. In each of the blades 3, a plurality of bolts 35 are inserted through the side portions 31B, 31B and the arm receiving member 34 and screwed in nuts 35A. Thus, the arm receiving member 34 is fixed to the blade 3. The arm 4 is externally fitted in the portion of the arm receiving member 34 protruding from the blade 3, and the arm 4 is fixed to the arm receiving member 34 by means of the plurality of bolts 35 and nuts 35A. The arm receiving member 34 is formed of an extrudate of aluminum alloy with a solid core. Accordingly, the arm support member 31, the arm receiving member 34 and the bolts 35 and nuts 35A constitute arm fixing means 36 for fixing the arm 4 to the blade 3.

Each of the blades 3 at both end portions in the longitudinal direction thereof is provided with lid plates 41 configured to close the end portions. Each of the lid plates 41 is fixed by a fixing member 42 having a nearly L-shaped cross section. One side piece 42A of the fixing member 42 is fixed to the internal face of the blade 3 by rivets 20. Another side piece 42B of the fixing member 42 is fixed to the lid plate 41 by rivets 20. The front side of the lid plate 41 is fixed by inserting screws not shown through the lid plate 41 and engaging the screws to the screw holes 22.

The fixing member 42 at its one side piece is provided with a receiving groove portion 131A configured to have the folded edge portion 13A fitted therein. Further, the arm support member 31 on an edge of the side portion 31B is provided with a receiving groove portion 131B configured to have the folded edge portion 14A fitted therein.

Each of the blades 3 in its reverse face 6 is provided with a plurality of opening portions 51,51... The plurality of opening portions 51,51... are provided in a region of 55 to 95%, preferably 75 to 95% of the interspace between a front edge 52 and a rear edge 53 from the front edge 52, depending on the aerodynamic characteristics of the airfoil. The total area of these opening portions 51,51... is in the range of 30 to 5%, preferably 20 to 5%, of the area of the reverse face 6. Consequently, the blade 3 can have an airfoil shape ensuring a low Reynolds number and a high lift coefficient, and can have a structure such that the air flow turbulence on the side of the reverse face 6 is reduced in a zone of high wind speed.

The chord 54 of each of the blades 3 is mounted with an angle of 0 to 5° with respect to the direction of the wind to the blade 3 (the direction of a normal line to the direction of rotation T). In the drawing, W represents the direction of wind blowing.

Therefore, at the actuation in a zone of low wind speed, when the plurality of blades 3 catch wind, the wind drag from the rear side is increased by virtue of the opening portions 51 positioned in rear areas of the blades 3. This air drag produces an actuation torque for the forward rotation of the blades 3.

In contrast, in a zone of high wind speed exhibiting a peripheral speed ratio of 1 or greater, the blades 3 are rotated by the lift force produced thereon. In that instance, as the opening portions 51 are positioned in rear areas of the blades 3, any turbulence of air flow along the reverse face 6 from the front edge 52 toward the rear edge 53 can be suppressed to thereby produce a high rotary torque.

In this Example, as apparent from the above, there is provided a power-generating wind turbine comprising a rotating shaft 3 and, provided at given angular intervals around the rotating shaft 3 within a plane orthogonal to the rotating shaft 3, a plurality of blades 3, each of these blades 3 having the shape of a streamlined airfoil exhibiting a lift coefficient of 1.0 or higher, wherein the face of the airfoil on the side of the rotating shaft with respect to a chord 54 of the airfoil, namely, a reverse face 6 is provided with an opening portion 51 in a region of 55 to 95% of the length of the chord from its front edge 52. Therefore, the wind turbine can be actuated even with a slight breeze due to the drag force at the opening portion 51. In a zone of high wind speed in which the wind turbine is rotated by the lift force of the blades 3, due to the opening portion 51 provided in a position of 55 to 95% of the length of the chord set distant from the front edge 52 of the reverse face 6 of the blades 3, any turbulence of the wind flow on the reverse face 6 that causes resistances can be suppressed, thereby realizing a high rotary torque.

Further in this Example, as apparent from the above, the area of the opening portion 51 is in the range of 30 to 5% of the area of the face on the side of the rotating shaft, namely, the reverse face 6. Therefore, there can be realized enhanced suppression of any wind flow turbulence.

Further in this Example, as apparent from the above, there are provided a plurality of opening portions 51. Therefore, efficient capturing of wind can be attained at start-up.

Further in this Example, as apparent from the above, the reverse cover member 21 as a member of the opening portion 51 is thinner than the front portion 11 of each of the blades 3. Therefore, the strength of the front portion 11 can be secured by increasing the thickness of the front portion 11 exposed to an intense resistance of wind. Weight reduction can be attained by decreasing the thickness of the member of the opening portion 51.

In this Example, as apparent from the above, the method of manufacturing the blades defined in claim 1 comprises forming at least a portion of each of the blades 3 by extrusion of an aluminum alloy. Therefore, uniform thickness and shape can be ensured by extrusion forming of an aluminum alloy.

Further in this Example, as apparent from the above, the front portion 11 of each of the blades 6 is formed of an extrudate of an aluminum alloy. Therefore, desirable strength and uniform shape can be ensured for the front portion 11 exposed to an intense wind resistance.

Further in this Example, as apparent from the above, the front portion 11 is provided with a hollow portion 12. Therefore, higher strength can be realized by including the hollow portion 12.

Further in this Example, as apparent from the above, the front portion 11 is provided with obverse face and reverse face coupling portions 13,15 for coupling an obverse cover member 19 and a reverse cover member 21 as rear-side members. Therefore, the obverse cover member 19 and reverse cover member 21 can be coupled to the obverse face and reverse face coupling portions 13,15.

Further in this Example, as apparent from the above, the obverse cover member 19 and reverse cover member 21 as rear-side members are thinner than the front portion 11. Therefore, weight reduction can be attained by reducing the thicknesses of the obverse cover member 19 and reverse cover member 21.

Further in this Example, as apparent from the above, the coupling portions 13,15 are formed by extrusion of an aluminum alloy. Therefore, desirable strength and uniform shape can be ensured for the coupling portions 13,15.

Further in this Example, as apparent from the above, the coupling portions 13,15 at end portions thereof are provided with tier portions 15,17 corresponding to the thicknesses of the obverse cover member 19 and reverse cover member 21 as rear-side members, and the front sides of the obverse cover member 19 and reverse cover member 21 are disposed on the tier portions 15,17. Therefore, the occurrence of any level difference between the front portion 11 and each of the obverse cover member 19 and the reverse cover member 21 can be avoided.

As a further effect of this Example, the front portion 11 is provided with screw holes 22, so that lid plates 41 or the like can be easily attached to the end portions by means of screws.

### Example 2

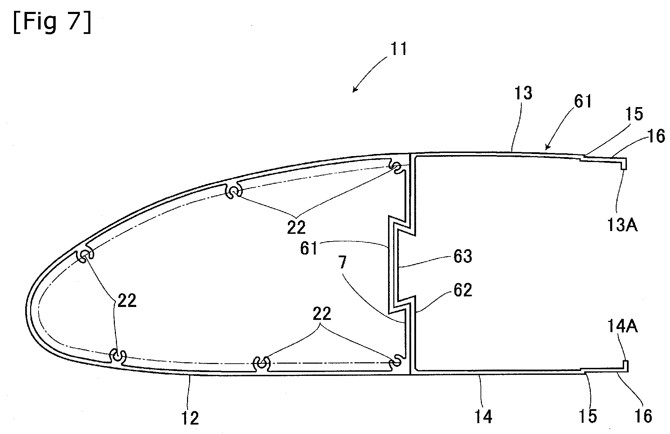

FIG. 7 illustrates Example 2 of the present invention. Like elements are identified by like numerals or marks through Examples 1 and 2, and repetition of detailed descriptions will be avoided. In this Example, the front portion 11 is composed of a hollow portion 12 and, disposed separate from the hollow portion 12, a divided part 61. This divided part 61 has a nearly 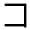 -shaped configuration in which the front ends of the obverse face coupling portion 13 and reverse face coupling portions 14 are coupled together by means of a rear coupling member 62 of sheet form. A fitting groove 7A is provided in the above coupling member 7, and a fitting portion 62A configured to fit in the fitting groove 7A is provided in the rear coupling member 62. These fitting groove 7A as a fitting receiving portion and fitting portion 62A constitute coupling means 63. Both the front portion 11 and the divided part 61 are formed of an extrudate of an aluminum alloy. In the hollow portion 12, the screw holes 22 are provided at two locations at both end corner portions of the coupling member 7, two locations on the center side and two locations on the front side.

Therefore, the hollow portion 12 and the divided part 61 are coupled and unified together by fitting the fitting portion 62A in the fitting groove 7A and shifting the divided part 61 in the longitudinal direction thereof toward the hollow portion 12.

In this Example, as apparent from the above, the coupling means 63 for coupling together the front portion 11 and the coupling portions 13,15 is integrally provided, so that the front portion 11 can be coupled to the divided part 61 including the coupling portions 13,15 by the coupling means 63.

Further in this Example, as apparent from the above, the coupling means 63 is provided with the fitting portion 62A disposed at one of the front portion 11 and the divided part 61 including the coupling portions 13,15 and with the fitting groove 7A as a fitting receiving portion disposed on the other thereof, so that the front portion 11 and the coupling portions 13,15 can be coupled together by the fitting of the fitting portion 62A in the fitting groove 7A.

The present invention is in no way limited to these Examples, and various modifications thereof can be implemented.

### BRIEF DESCRIPTION OF THE SEVERAL VIEWS OF THE DRAWING

FIG. 1 is a front view of a wind turbine according to Example 1 of the present invention.
FIG. 2 is a rear view of a blade according to Example 1 of the present invention.
FIG. 3 is a plan view of a wind turbine according to Example 1 of the present invention.
FIG. 4 is a cross-section view of a blade according to Example 1 of the present invention.
FIG. 5 is a rear view of main portions of a blade according to Example 1 of the present invention.
FIG. 6 is a cross-section view of main portions of a blade according to Example 1 of the present invention.
FIG. 7 is a cross-section view of main portions of a blade according to Example 2 of the present invention.

### DEFINITION OF MARK

- 1: WIND TURBINE
- 2: ROTATING SHAFT
- 3: BLADE
- 4: ARM
- 5: OBVERSE FACE
- 6: REVERSE FACE
- 7: COUPLING MEMBER
- 11: FRONT PORTION
- 12: HOLLOW PORTION
- 13: OBVERSE FACE COUPLING PORTION
- 14: REVERSE FACE COUPLING PORTION
- 15: TIER PORTION
- 16: ATTACHING PORTION
- 17: TIER PORTION
- 18: ATTACHING PORTION
- 19: OBVERSE COVER MEMBER (REAR-SIDE MEMBER)
- 21: REVERSE COVER MEMBER (REAR-SIDE MEMBER)
- 31: ARM SUPPORT MEMBER
- 51: OPENING PORTION
- 52: FRONT EDGE
- 53: REAR EDGE
- 54: CHORD
- 7A: FITTING GROOVE (FITTING RECEIVING PORTION)
- 62A: FITTING PORTION
- 63: COUPLING MEANS

## Claims

1. A power-generating wind turbine including a rotating shaft (2) and, provided at given angular intervals around the rotating shaft (2), a plurality of blades (3), each of these blades (3) having the shape of a streamlined airfoil exhibiting a lift coefficient of 1.0 or higher,
wherein the face of the airfoil on the side of the rotating shaft (2) with respect to a chord (54) of the airfoil is provided with a plurality of opening portions (51) in a region of 55 to 95% of the length of the chord (54) from its front edge (52), and
the total area of the plurality of opening portions (51) is in the range of 30 to 5% of the area of the face of the airfoil on the side of the rotating shaft (2).

2. The power-generating wind turbine according to claim 1, **characterized in that** each of the opening portions comprises a member thinner than that of a front portion of the blade.

3. A method of manufacturing a power-generating wind turbine through fabrication of the blades defined in claim 1, **characterized in that** at least a front portion of each of the blades is formed by extrusion of an aluminum alloy.

4. The method of manufacturing a power-generating wind turbine according to claim 3, **characterized in that** the front portion has a hollow portion.

5. The method of manufacturing a power-generating wind turbine according to claim 4, **characterized in that** the front portion is provided with a coupling portion configured to couple a rear-side member to the front portion.

6. The method of manufacturing a power-generating wind turbine according to claim 5, **characterized in that** rear-side member has a thickness smaller than that of the front portion.

7. The method of manufacturing a power-generating wind turbine according to claim 5, **characterized in that** the coupling portion is formed by extrusion of an aluminum alloy.

8. The method of manufacturing a power-generating wind turbine according to claim 6, **characterized in that** the coupling portion at its end portion is provided with a tier portion corresponding to the thickness of the rear-side member, and that a front side of the rear-side member is disposed on the tier portion.

9. The method of manufacturing a power-generating wind turbine according to claim 7, **characterized in that** there is provided coupling means for coupling the front portion to the coupling portion.

10. The method of manufacturing a power-generating wind turbine according to claim 9, **characterized in that** the coupling means includes a fitting portion provided on one of the front portion and the coupling portion and a fitting receiving portion provided on the other thereof.

## Patentansprüche

1. Energieerzeugende Windturbine, die eine Drehwelle (2) und mehrere Schaufeln (3) aufweist, die in gegebenen Winkelabständen um die Drehwelle (2) bereitgestellt sind, wobei jede dieser Schaufeln (3) die Form eines stromlinienförmigen Tragflächenprofils hat, das einen Auftriebskoeffizienten von 1,0 oder höher aufweist,
wobei die Fläche des Tragflächenprofils auf der Seite der Drehwelle (2) in Bezug auf eine Sehne (54) des Tragflächenprofils mit mehreren Öffnungsabschnitten (51) in einem Bereich von 55 bis 95% der Länge der Sehne (54) von ihrer Vorderkante (52) bereitgestellt ist, und der Gesamtbereich der mehreren Öffnungsabschnitte (51) im Bereich von 30 bis 5% des Bereichs der Fläche des Tragflächenprofils auf der Seite der Drehwelle (2) liegt.

2. Energieerzeugende Windturbine nach Anspruch 1, **dadurch gekennzeichnet, dass** jeder der Öffnungsabschnitte ein Element umfasst, das dünner als das eines vorderen Abschnitts der Schaufel ist.

3. Verfahren zum Herstellen einer energieerzeugenden Windturbine durch Fertigen der Schaufeln nach Anspruch 1, **dadurch gekennzeichnet, dass** mindestens ein vorderer Abschnitt von jeder der Schaufeln durch Extrusion einer Aluminiumlegierung gebildet ist.

4. Verfahren zum Herstellen einer energieerzeugenden Windturbine nach Anspruch 3, **dadurch gekennzeichnet, dass** der vordere Abschnitt einen hohlen Abschnitt hat.

5. Verfahren zum Herstellen einer energieerzeugenden Windturbine nach Anspruch 4, **dadurch gekennzeichnet, dass** der vordere Abschnitt mit einem Kopplungsabschnitt bereitgestellt ist, der konfiguriert ist, um ein rückseitiges Element an den vorderen Abschnitt zu koppeln.

6. Verfahren zum Herstellen einer energieerzeugenden Windturbine nach Anspruch 5, **dadurch gekennzeichnet, dass** das rückseitige Element eine Dicke hat, die kleiner als die des vorderen Abschnitts ist.

7. Verfahren zum Herstellen einer energieerzeugenden Windturbine nach Anspruch 5, **dadurch gekennzeichnet, dass** der Kopplungsabschnitt durch Extrusion einer Aluminiumlegierung gebildet ist.

8. Verfahren zum Herstellen einer energieerzeugenden Windturbine nach Anspruch 6, **dadurch gekennzeichnet, dass** der Kopplungsabschnitt an seinem Endabschnitt mit einem Stufenabschnitt bereitgestellt ist, der der Dicke des rückseitigen Elements entspricht, und eine Vorderseite des rückseitigen Elements auf dem Stufenabschnitt angeordnet ist.

9. Verfahren zum Herstellen einer energieerzeugenden Windturbine nach Anspruch 7, **dadurch gekennzeichnet, dass** ein Kopplungsmittel zum Koppeln des vorderen Abschnitts an den Kopplungsabschnitt bereitgestellt ist.

10. Verfahren zum Herstellen einer energieerzeugenden Windturbine nach Anspruch 9, **dadurch gekennzeichnet, dass** das Kopplungsmittel einen Passabschnitt, der auf einem des vorderen Abschnitts und des Kopplungsabschnitts bereitgestellt ist, und einen Aufnahmeabschnitt aufweist, der auf dem anderen davon bereitgestellt ist.

## Revendications

1. Éolienne de génération d'énergie comportant un arbre de rotation (2) et, pourvues à intervalles angulaires donnés autour de l'arbre de rotation (2), une pluralité de pales (3), chacune de ces pales (3) ayant la forme d'une aile profilée présentant un coefficient de portance de 1,0 ou plus,
dans laquelle la face de l'aile sur le côté de l'arbre de rotation (2) par rapport à une corde (54) de l'aile est pourvue d'une pluralité de portions d'ouverture (51) dans une région de 55 à 95 % de la longueur de la corde (54) depuis son bord avant (52), et
la zone totale de la pluralité de portions d'ouverture (51) est comprise dans la plage de 30 à 5 % de la zone de la face de l'aile sur le côté de l'arbre de rotation (2).

2. Éolienne de génération d'énergie selon la revendication 1, **caractérisée en ce que** chacune des portions d'ouverture comprend un élément plus mince que celui d'une portion avant de la pale.

3. Procédé de fabrication d'une éolienne de génération d'énergie en fabriquant des pales définies selon la revendication 1, **caractérisé en ce qu'**au moins une portion avant de chacune des pales est formée par extrusion d'un alliage d'aluminium.

4. Procédé de fabrication d'une éolienne de génération d'énergie selon la revendication 3, **caractérisé en ce que** la portion avant a une portion creuse.

5. Procédé de fabrication d'une éolienne de génération d'énergie selon la revendication 4, **caractérisé en ce que** la portion avant est pourvue d'une portion de couplage configurée pour coupler un élément latéral arrière à la portion avant.

6. Procédé de fabrication d'une éolienne de génération d'énergie selon la revendication 5, **caractérisé en ce que** l'élément latéral arrière a une épaisseur plus petite que celle de la portion avant.

7. Procédé de fabrication d'une éolienne de génération d'énergie selon la revendication 5, **caractérisé en ce que** la portion de couplage est formée par extrusion d'un alliage d'aluminium.

8. Procédé de fabrication d'une éolienne de génération d'énergie selon la revendication 6, **caractérisé en ce que** la portion de couplage au niveau de sa portion d'extrémité est pourvue d'une portion étagée correspondant à l'épaisseur de l'élément latéral arrière, et **en ce qu'**un côté avant de l'élément latéral arrière est disposé sur la portion étagée.

9. Procédé de fabrication d'une éolienne de génération d'énergie selon la revendication 7, **caractérisé en ce qu'**un moyen de couplage est prévu pour coupler la portion avant à la portion de couplage.

10. Procédé de fabrication d'une éolienne de génération d'énergie selon la revendication 9, **caractérisé en ce que** le moyen de couplage comporte une portion de raccord prévue sur une portion parmi la portion avant et la portion de couplage et une portion de réception de raccord prévue sur l'autre portion.
